Europäisches Patentamt

European Patent Office

Office européen des brevets

(11) Publication number: **0 028 587**
**B1**

(12) **EUROPEAN PATENT SPECIFICATION**

(45) Date of publication of patent specification: **10.04.85**

(51) Int. Cl.⁴: **F 24 J 3/00, F 24 J 2/30**

(21) Application number: **80810340.2**

(22) Date of filing: **05.11.80**

(54) **Solar panel.**

(30) Priority: **05.11.79 US 91325**

(43) Date of publication of application:
**13.05.81 Bulletin 81/19**

(45) Publication of the grant of the patent:
**10.04.85 Bulletin 85/15**

(84) Designated Contracting States:
**CH DE FR GB IT LI SE**

(56) References cited:
**DE-A-2 546 069**
**DE-A-2 828 675**
**FR-A-2 352 261**
**US-A-3 946 720**
**US-A-4 077 393**
**US-A-4 095 585**
**US-A-4 106 479**
**US-A-4 213 448**

(73) Proprietor: **Wagner, Gerard**
**1202-2075 Comox Street**
**Vancouver, BC V6G 1S2 (CA)**
(73) Proprietor: **Schmid, Klaus**
**1365 Laburnum Street**
**Vancouver (CA)**

(72) Inventor: **Wagner, Gerard**
**1202-2075 Comox Street**
**Vancouver, BC V6G 1S2 (CA)**
Inventor: **Schmid, Klaus**
**1365 Laburnum Street**
**Vancouver (CA)**

(74) Representative: **Schaad, Walter F. et al**
**Patentanwälte Schaad Balass Sandmeier Alder**
**Dufourstrasse 101**
**CH-8034 Zürich (CH)**

Courier Press, Leamington Spa, England.

## Description

The present invention relates to a solar panel of the type defined in the preamble of claim 1.

A panel of the type referred to above is disclosed in US—A—4.095.585. In this known solar panel the heat storage means include an assembly of three metal plates arranged between insulating panels. Provided on each side of a perforated flat plate is an outer plate having corrugations and the outer plates are connected to the flat plate in flat areas between the corrugations. These corrugations define with each other closed storage spaces filled with a storage fluid and further contain with the insulating panel adjacent to the respective outer plate the secondary portion of the collector circuit on the one hand and the primary portion of the user circuit on the other hand.

The assembly of plates provided in this solar panel constitutes the element which maintains collector fluid and user fluid separated from each other and any heat exchange between these two fluids must occur across the assembly. Since the assembly itself includes the spaces for heat storage these spaces impede a rapid exchange of heat between collector fluid and user fluid.

In FR—A—23 52 261 a solar panel is disclosed in which a heat storage vessel forms part of a collector circuit on the one hand and a user circuit on the other. The collector circuit is in heat exchange contact with a solar radiation collector wall and the emitter circuit is in heat exchange contact with a heat emitter wall for exposure to a space to be heated. Since hot collector fluid can enter the user circuit after passage through the common heat storage vessel or mix directly with cold fluid from the user circuit there are no problems of heat exchange across a separation. However, it is obvious that this solar panel must employ the same fluid in the collector circuit as in the user circuit which represents a severe limitation in a number of applications.

The present invention aims at improving the heat flow in a solar panel from collection to emission and in particular to providing for a rapid exchange of heat between the collecting fluid and the emitting fluid while at the same time affording the capability of storing the collected heat.

In accordance with the invention this aim is achieved by the features of the characterizing clause of claim 1.

Due to the fact that there is only a panel element which separates the collector fluid from the emitter fluid there is no further impediment to the exchange of heat. In addition further heat collected may still be stored in the independent storage volume. Heat flow through the panel in accordance with the invention is improved since there is efficient heat exchange between the collector wall and the collector fluid and between the emitter fluid and the emitter wall.

At the same time, due to the independence of the emitter fluid path from the collector fluid path the solar panel in accordance with the invention retains the possibility of incorporation in a backup central heating system and/or the supplying of heat to a remote location.

The panel comprises an interior heat storage means which may further include a storage fluid conducting path for directing storage fluid around an endless loop from the secondary portion of the collector fluid path wherein there is heat exchanging association with the collector fluid to the primary portion of the emitter fluid path where there is heat exchanging association with the emitter fluid.

The panel includes a pair of insulation panels, one being between the primary and secondary portions of each of the collector and emitter fluid paths.

The storage fluid in the storage fluid path may be separated from the collector fluid in the secondary portion of the collector fluid path and from the emitter fluid in the primary portion of the emitter fluid path by walls of the heat conducting sheet material. In order to optimize heat transfer efficiency the walls of the heat conducting sheet material in the second portion of the collector path and the primary portion of the emitter fluid path are traversed by passageways which permit collector fluid in the secondary portion of the collector fluid path and emitter fluid in the primary portion of the emitter fluid path to flow into contact with associated sides of the heat exchanger panel.

Advantageously, the heat conducting sheet material has a front face with a plurality of uniformly shaped recesses, the recesses each being within an equilateral triangle and the triangles defining an array. Each edge of each triangle is shared by an adjacent triangle and the recesses define the approximate shape of an inverted pyramid which has an equilaterally triangular base, equal side edges and the length of one edge of the base equal to $2\sqrt{6}$ times the depth of the pyramid. The back surface of the heat conducting sheet material forms an array of straight interconnected fluid-carrying channels.

The backside of the textured sheet material when so shaped is completely wetted by the collector fluid thus providing an immediate heat exchange and fast removal of the collected heat.

By providing a textured surface which is completely darkened the total area of the textured surface is available for absorbing the suns rays.

Additional improvement is obtained by providing a transparent cover which is also formed by a plurality of inverted pyramidal recesses similar to those of the heat conducting sheet material aforesaid. Such transparent covers reduce the reflection of the sun rays in comparison to reflection which occurs with an ordinary flat transparent cover.

Figure 1 is a schematic diagram showing the main components of the panel together with their operation;

Figure 2 is an end view in section of the panels showing its construction;

Figure 3 is a plan view of a portion of a solar radiation absorbing surface;

Figure 4 is a sectional view of the solar radiation absorbing surface taken along line 4—4 of Figure 3;

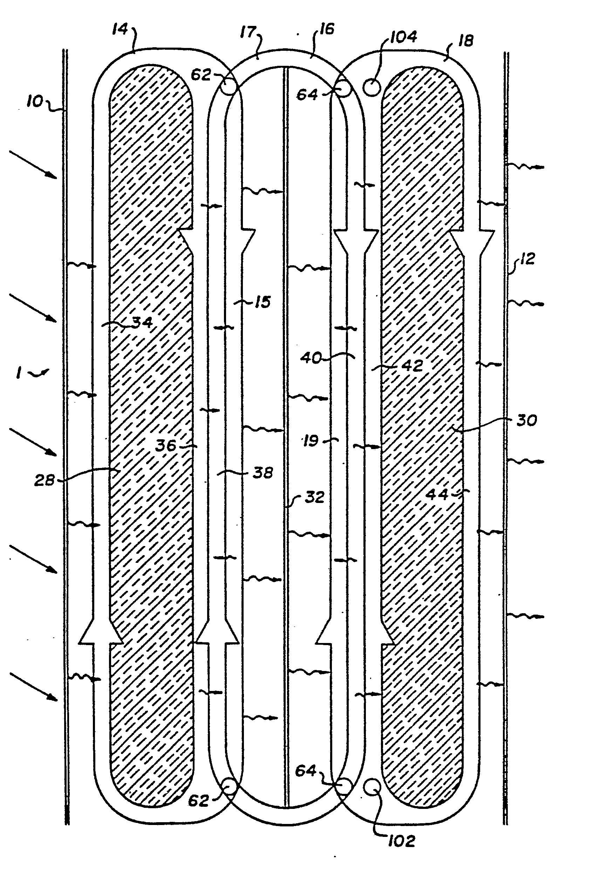

In Figure 1, the panel 1 includes an interior collector chamber 14, a storage chamber 16 and an emitter chamber 18 between a collector surface 10 of a collector wall 24 and an emitter surface 12 of an emitter wall 26. Each of these chambers is a vertically elongate loop and adjacent chambers are in thermally conductive association with each other. The vertically directed arrowheads formed on the chambers indicate the direction of flow of the collector fluid 15, storage fluid 17 and emitter fluid 19 within the chambers. The inclined arrows to the left of Figure 1 represent solar radiation striking collector surface 10, while the remaining horizontal arrows represent the transfer of heat. The portion 34 of collector chamber 14 is heated by conduction from a back surface of collector wall 24 whose collector surface 10 is heated by the sun. An insulating panel 28 separates primary portion 34 of chamber 14 from secondary portion 36. Secondary portion 36 extends to the opposite side of portion 38 of the storage chamber 16 through the apertures 62 in the storage chamber. Accordingly, the collector fluid within portion 36 of collector chamber 14 heats both sides of portion 38 of storage chamber 16.

Portion 36 of the collector chamber 14 is separated from the emitter fluid 19 in primary portion 42 of emitter chamber 18 by the vertically extending heat exchanger panel 32 element. Heat is transferred directly to emitter fluid 19 from collector fluid 15 through exchanger panel element 32.

Since heat is transferred to primary portion 34 of collector chamber 14 from the collector wall 10 and is transferred from secondary portion 36 to primary portion 38 of the storage chamber 16 and to a primary portion 42 of emitter chamber 18 through heat exchanger panel element 32, convection currents are set up within collector chamber 14 to circulate fluid 15 in the direction indicated by the arrows.

Similarly, heat is transferred to storage fluid 17 in primary portion 38 of storage chamber 16 from collector fluid 15 in the secondary portion 36 of collector chamber 14 and is transferred to the emitter fluid 19 in portion 42 of emitter chamber 18 from portion 40 of the storage chamber. The heat absorption and transferral aforesaid results in convection currents in storage chamber 16 which cause circulation of the storage fluid 17 in the direction indicated by the arrows.

Finally, in emitter chamber 18, portion 42, as mentioned, is heated by the collector fluid 15 through heat exchanger panel element 32 and by the storage fluid 17 in the secondary portion 40 of the storage chamber. When heat is transferred by conduction to emitter wall 26 and radiated by emitter surface 12 to an area to be heated, convection currents are formed in the emitter chamber 18 which circulate the emitter fluid in the direction indicated by the arrows.

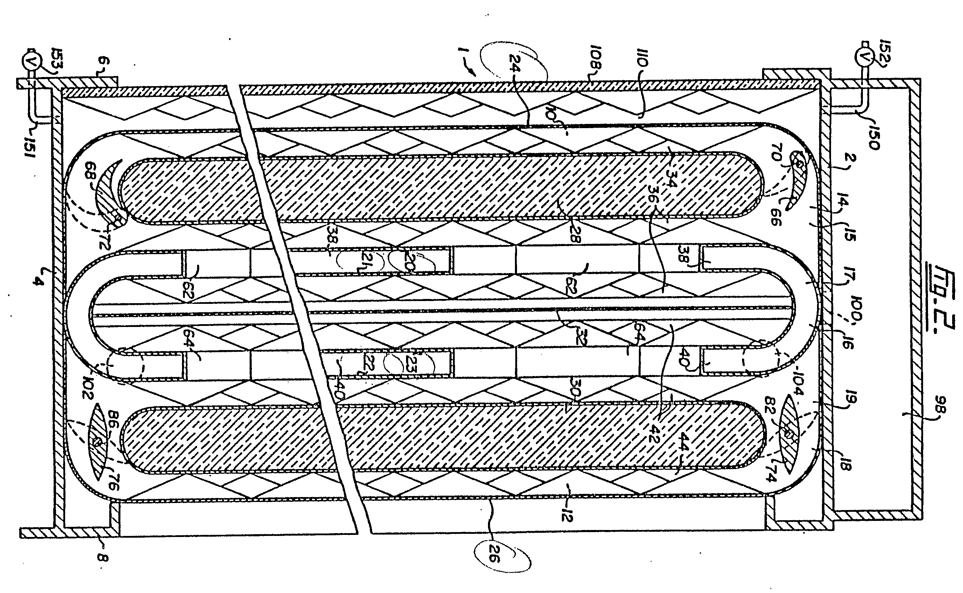

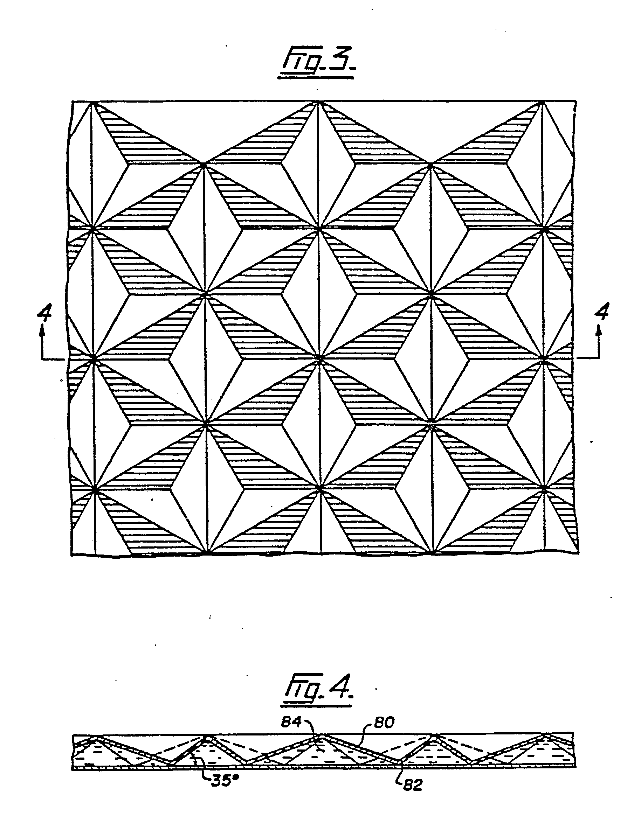

Figure 2 illustrates more fully the solar panel 1 which may be used vertically or inclined as a modular building component with inherent insulating capacity. Panel 1 has a top 2, a bottom 4 and opposite ends 6 and 8. The front face of panel 1 comprises wall 24 having collector 10 for exposure to solar radiation. The back face of the panel, on the side opposite the collector surface 10 comprises an emitter wall 26 having an emitter surface 12 for radiating heat to an area to be heated. The interior of panel 1 is divided into collector chamber 14 and heat emitter and storage means comprising storage chamber 16 and emitter chamber 18 by dividing walls 20, 21, 23 and 22. The collector wall 24 and emitter wall 26 comprise outer dividing walls. All of the dividing walls are of a thermally conductive material, such as copper, so that fluids within the chambers are in thermally conductive association with each other and with the walls 24 and 26. In the preferred embodiment of Figure 2 walls 20, 21, 22, 23, 24 and 26 are formed of a heat conducting sheet material, with the array of pyramidal recesses as seen best in Figures 3 and 4 and described more fully below.

Each of the chambers 14, 16 and 18 form endless loops which may be inclined or vertical when the panel is oriented for use as shown in Figure 2. The loops are formed around the insulating means constituting insulating panels 28 and 30, which extend from near the top to near the bottom of the vertically elongate chambers 14 and 18, and around the heat exchanger panel element 32. Panels 28 and 30 are fabricated of an insulating material such as urethane foam. The collector chamber 14 therefore has an outside primary portion 34 which extends between insulating panel 28 and dividing wall 24 while its inside secondary portion 36 is between the panel 28 and heat exchanger panel element 32. Portions 34 and 36 of collector chamber 14 are interconnected above and below insulating panel 28. Similarly, storage chamber 16 has a primary portion 38 and a secondary portion 40, while emitter chamber 18 has an inside primary portion 42 and an outside secondary portion 44.

Portion 36 of collector chamber 14 extends through apertures 62 in portion 38 of storage chamber 16 to corrugated heat exchanger panel element 32. Similarly, portion 42 of the emitter chamber 18 extends to the opposite side of storage chamber 16 through apertures 64 in portion 40 of storage chamber 16.

Various collector fluids 15 could be used, but a water and antifreeze solution is preferred. As collector surface 10 is heated by the sun, the heat is transferred by conduction through collector wall 24 to the collector fluid 15 within vertically elongate outside portion 34 of the collector chamber 14. The temperature differential which arises causes the fluid 15 to circulate upwardly and over the top of insulating panel 28. The fluid 15 then circulates down the secondary portion 36 of collector chamber 14 where it heats the storage medium in the primary portion 38 of storage chamber 16 by conduction through dividing walls 20 and 21 and heats the emitter chamber 18 through heat exchanger panel element 32. The convection current carries the collector fluid 15 downwardly below insulating panel 28 where it is again circulated upwardly and heated by collector surface 10.

When the collector fluid 15 is no longer heated by solar radiation, for example, at night or during heavy clouding, it is desirable to prevent a reverse flow of heat from the storage medium to the collector wall 24. This would arise due to radiative cooling from the collector surface 10 of collector wall 24 and hence cooling of the collector fluid 15 in the primary portion 34 of the collector path or chamber 14. To stop this, the collector chamber 14 is provided with check valve means which, in the preferred embodiment, comprises a pair of curved flaps 66 and 68 pivotally mounted on shafts 70 and 72, respectively, and extending laterally across the chamber 14 above and below insulating panel 28. During the normal circulation of collector fluid upwardly through portion 34 of collector chamber 14 and downwardly through portion 36, the movement of fluid holds flaps 66 and 68 in the open position, shown in solid lines, thereby permitting the flow of fluid. However, once the circulation of fluid stops, as occurs when collector surface 10 heats the fluid at the same rate as walls 20 and 21 and panel element 32, the flaps 66 and 68 drop to the closed position, shown in broken lines, and prevent a reverse flow of fluid 15 upwardly through portion 36 of chamber 14 and downwardly through portion 34. In essence therefore, flaps 66 and 68 not only act as check valves for the collector fluid 15 within the chamber 14, but also act as check valves to prevent a reverse flow of heat from the storage medium in chamber 16 to collector wall 24.

Emitter chamber 18 is essentially similar in configuration to collector chamber 14 and contains heat carrying emitter fluid 19 which is preferably water so that it can be distributed as ordinary domestic hot water. The fluid within inside portion 42 of emitter chamber 18 is heated in two ways. Firstly, it is directly heated by the heat exchanger panel element 32 by means of the collector fluid 15 in heating portion 36 of collector chamber 14 passing through apertures 62. Secondly, the emitter fluid 19 is heated by the storage medium through dividing walls 22 and 23 separating chamber 18 from storage chamber 16. The heating of the emitter fluid 19 causes convection currents within emitter chamber 18 to circulate the fluid 19 upwardly through portion 42 and downwardly through portion 44. Heat from the emitter fluid 19 in portion 44 passes by conduction through emitter wall 26 and is radiated from emitter surface 12 to the area requiring space heating. As with the collector chamber 14, emitter chamber 18 has a pair of similar flaps 74 and 76 for controlling the circulation of fluid within the chamber.

In order to prevent overheating of the interior area and to conserve heat, flaps 74 and 76 can be closed by a device, (not shown), which may be manually or thermostatically controlled, for stopping the heat carrying emitter fluid from circulating within emitter chamber 18 when heat is not required. The device employed consists of a manually operable dial (not shown) coupled to each of shafts 86 and 82. Alternatively, flaps 74 and 76 can be held in an open position to allow a reverse flow of fluid in the emitter path so that heat may be absorbed from an interior space and stored.

The construction and operation of storage chamber 16 is generally the same as for collector chamber 14 and emitter chamber 18, although there is no need for check valve means to limit the fluid flow to one direction only. The storage medium 17 within chamber 16 of the preferred embodiment is a fluid, at least when heated, and may comprise a latent heat storage medium referred to as a phase change material (P.C.M.), with a melting point suitable for the intended temperature range. For example paraffins of selected molecular composition or solutions with hydrated salts may be used.

Since substantial expansion of the storage medium may occur upon heating, an expansion chamber 98 is provided on the top of panel 1 and is connected to storage chamber 16 by means of conduit 100. It should be noted that the heating of the storage medium does not provide a lag in the operation of the solar panel. As soon as heat is available at collector wall 24, the collector fluid 15 within chamber 14 is circulated and can pass directly to the heat exchanger panel element 32 which heats the emitter fluid 19. The heated emitter fluid 19 immediately circulates around to emitter wall 26 and radiates heat from emitter surface 12. Additionally, when the emitter fluid is water, an inlet pipe 102 and outlet pipe 104 are connected to the panel so that the hot water can be circulated through a domestic hot water system.

Since all of the dividing walls 20, 21, 22, 23, 24 and 26 transfer heat by conduction, their effectiveness is increased when their surface areas are increased. Their efficiency can therefore be increased by providing any textured or convoluted shape such as the corrugated shape of panel element 32. However, in the preferred embodiment, all of these dividing walls are provided with a textured surface comprising a plurality of adjacent pyramids 80 as seen in Figures 3 and 4 for dividing walls 24 and 26. In the case of collector surface 10 and emitter surface 12, the pyramids are recessed. As easily seen, the bases 82 are equilateral triangles of the same size. As shown in Figure 4 the sides of the pyramids make an angle of approximately 35° with the base. This particular shape of textured surface provides particular advantages for the collector surface 10. As may be appreciated for a stationary panel it is desirable to provide a shape for a collector surface which will optimally collect solar radiation regardless of the travel of the sun. The collector surface 10 employs a plurality of adjacent triangular recessed pyramids which fully occupy the surface. The particular proportions of the pyramids is an approximation of a spherical surface, resulting in the angle of approximately 35° between the sides of the pyramids and their bases. This is equivalant approximately to a pyramid having a height related to one side of the base in the proportion of $1:2\sqrt{6}$. When the sun travels, each of the recessed pyramids 80 on a properly positioned panel can present at least one side generally towards the sun and the radiation is absorbed by surface 10 without undue reflection.

The reversed (back) side of walls having such textured surfaces has a plurality of vertical and diagonally interconnecting channels 84 thus providing a conduit with an optimal wetted surface.

As with most solar panels, there is a transparent cover 108 covering the collector surface 10 and spaced-apart therefrom. The space 110 between the collector surface 10 and cover 108 may be vented by tubes 150 and 151 and valves 152 and 153 to remove excess heat from the panel in case of overheating. As shown best in Figure 2 the transparent cover 108 is also shaped like a plurality of adjacent triangular pyramids in the manner of the dividing walls in order to reduce reflection.

Modification can be made to the preferred embodiment described above within the scope of the present invention. For example, the heat storage chamber could comprise a series of pipe loops or the conduits at either end of the storage loop which connect primary and secondary portions thereof could be eliminated to create two independent storage chambers. Alternatively, the storage chamber could be eliminated. The heat would then be stored in the secondary portion of the collector chamber and the primary portion of the emitter chamber.

Although in the preferred embodiment described above heat exchanger panel element 32 is corrugated it will be appreciated that any type of texturing of its surfaces that increases its surface area in contact with the collector and emitter fluids will increase its heat transfer efficiency.

Similarly dividing walls 24 and 26 could be corrugated or some other simplified shape if reduced efficiency were acceptable.

## Claims

1. A solar panel comprising an interior heat storage means including a secondary portion (36) of a closed loop collector fluid conducting path (14), a primary portion (42) of a closed loop emitter fluid conducting path (18), a heat exchanger means separating said secondary portion from said primary portion and a storage volume (16), said secondary and primary portions, said heat exchanger means, and said storage volume being arranged between a pair of insulating panels (28, 30), a primary portion (34) of said collector fluid path and a secondary portion (44) of said emitter fluid path being arranged outside of said insulating panels said primary portion of said collector fluid conducting path having heat exchanging contact with a solar radiation collecting means, characterized by said heat exchanger means being constituted by a panel element (32) having an outer surface in heat exchanging contact with the collector fluid in said secondary portion and an inner surface in heat exchanging contact with the emitter fluid in said primary portion and said storage volume being separated and spaced from said panel element, said solar radiation collecting means containing a wall (24), a heat emitter wall (26) being mounted in heat exchanging contact with said secondary portion of said emitter fluid conducting path and wherein said collector and emitter walls each are made of a heat conducting sheet material.

2. A solar panel as defined in claim 1, wherein said heat storage volume includes a storage fluid conducting path (16) for directing a storage fluid (17) around an endless loop from the secondary portion (36) of the collector fluid path (14) wherein there is heat exchanging association with the collector fluid (15) to the primary portion (42) of the emitter fluid path (18) wherein there is heat exchanging association with the emitter fluid (19).

3. A solar panel as defined in claim 2, further comprising check valve means (66, 68, 74, 76) for controlling the fluid flow between primary portions (34, 42) and secondary portions (36, 44) of each of said collector and emitter fluid paths (14, 18).

4. A solar panel as defined in claim 3, wherein the storage fluid (17) in the storage fluid path (16) is separated from the collector fluid (15) in the secondary portion (36) of the collector fluid path (14) and from the emitter fluid (19) in the primary portion (42) of the emitter fluid path (18) by walls (20, 21, 22 and 23) of a heat conducting sheet material.

5. A solar panel as defined in claim 4, wherein the walls (20, 21, 22, 23) of the heat conducting sheet material in the secondary portion (36) of the collector fluid path (14) and the primary portion (42) of the emitter fluid path (18) are traversed by passageways (62, 64) which permit collector fluid in the secondary portion of the collector fluid path and emitter fluid in the primary portion of the emitter fluid path to flow into contact with associated sides of said heat exchanger panel element (32).

6. A solar panel as defined in claim 1 wherein the heat conducting sheet material has a front surface with a plurality of uniformly shaped recesses, the recesses each being within a equilateral triangle with the triangles defining an array in which each edge of each triangle is shared by an adjacent triangle and the recesses defining approximately the sides of an inverted pyramid (80) having an equilaterally triangular base, equal side edges and the length of one edge of the base equal to $2\sqrt{6}$ times the depth; and whereby the back surface of said heat conducting sheet material forms an array of straight, interconnected fluid-carrying channels (84).

7. A solar panel as defined in claim 6, further comprising a transparent cover (108) over said solar radiation collector wall (24) and means (150, 151, 152, 153) for venting a space between said cover and said collector wall to the atmosphere.

8. A solar panel as defined in claim 7, wherein said transparent cover (108) is a transparent sheet material whose outer face has a plurality of uniformly shaped recesses, the recesses each being within an equilateral triangle with the triangles defining an array in which each edge of each triangle is shared by an adjacent triangle and the recesses defining approximately the sides of an inverted pyramid having an equilaterally triangular base, equal side edges and the length of one edge of the base equal to $2\sqrt{6}$ times the depth.

9. A solar panel as defined in claims 3, 4 or 5 wherein said check valve means (66, 68, 74, 76) are located above and below each insulation panel (28, 30) for controlling fluid flow through said collector and emitter fluid paths.

10. A solar panel as defined in claims 1, 3 or 6 further comprising conduit means (102) connected to the emitter fluid path (18) and extending to a remote location.

**Revendications**

1. Panneau de façade solaire contenant un moyen de stockage de chaleur interne incluant une portion secondaire (36) d'un circuit de fluide fermé collecteur (14), une portion primaire (42) d'un circuit de fluide fermé émetteur (18), un panneau échangeur de chaleur séparant la portion secondaire de la portion primaire, et un volume de stockage, en ce que la portion secondaire et la portion primaire, le panneau échangeur de chaleur et le volume de stockage sont arrangés entre une paire de panneaux d'isolation (28, 30); la portion primaire (34) du circuit de fluide collecteur et la portion secondaire (44) du circuit de fluide émetteur étant arrangés en dehors des panneaux d'isolation, la portion primaire du circuit de fluide collecteur étant en contacte échangeur de chaleur avec un capteur de rayonnement solaire, caractérisé en ce que le panneau échangeur de chaleur étant constitué par un elément de panneau (32) avec une surface extérieure en contacte échangeur de chaleur avec le fluide collecteur dans la portion secondaire et avec une surface intérieure en contacte échangeur de chaleur avec le fluide émetteur dans la portion primaire et le volume de stockage étant séparé et éloigné de l'elément de panneau, le capteur de rayonnement solaire contenant une surface collectrice (24), une surface émettrice de chaleur (26) étant en contacte échangeur de chaleur avec la portion secondaire du circuit de fluide émetteur et en ce que les surfaces collectrices et émettrices sont faites d'un matériau en plaque capable à conduire la chaleur.

2. Panneau de façade solaire selon la revendication 1, caractérisé en ce que le volume de stockage contient un circuit de fluide de stockage (16) afin de conduire un fluide de stockage (17) autour d'un circuit fermé depuis la portion secondaire (36) du circuit de fluide collecteur (14), oú il y a association d'échange de chaleur avec le fluide collecteur (15), en direction de la portion primaire (42) du circuit de fluide émetteur (18), oú il y a association d'échange de chaleur avec le fluide émetteur (19).

3. Panneau de façade solaire selon la revendication 2, caractérisé en ce qu'il contient des vannes de réglage (66, 68, 74, 76) afin de contrôler le flux de fluide entre les portions primaires (34, 42) et les portions secondaires (36, 44) de chaque circuit de fluide collecteur et émetteur (14, 18).

4. Panneau de façade solaire selon la revendication 3, caractérisé en ce que le fluide de stockage (17) dans le circuit de stockage (16) est séparé du fluide collecteur (15) dans la portion secondaire (36) du circuit collecteur (14) et séparé du fluide émetteur (19) dans la portion primaire (42) du circuit émetteur (18) par des parois (20, 21, 22, 23) en matériau de plaque transmettant la chaleur.

5. Panneau de façade solaire selon la revendication 4, caractérisé en ce que les parois (20, 21, 22, 23) en matériau de plaque transmettant la chaleur dans la portion secondaire (36) du circuit collecteur (14) et dans la portion primaire (42) du circuit émetteur (18) sont traversées par des ouvertures (62, 64) qui permettent au fluide collecteur dans la portion secondaire du circuit collecteur et au fluide émetteur dans la portion primaire du circuit émetteur d'entrer en contacte avec les volumes associés de chaque coté de l'elément de panneau échangeur (32).

6. Panneau de façade solaire selon la revendication 1, caractérisé en ce que le matériau en plaque transmettant la chaleur est constitué par une surface extérieure avec un nombre de creux uniformes, dont chaque creux décrit un triangle équilatéral, où les triangles sont arrangés de façon que chaque coté de chaque triangle est partagé avec un triangle d'à coté et en ce que les creux définissent approximativement les cotés d'une pyramide inverse à base triangulaire équilatérale, des arrêtes égales et la longueur d'un coté de la base égal au produit $2\sqrt{6}$ multiplié avec la profondeur, et en ce que la surface en revers de la plaque en matériau transmettant la chaleur forme une série de canaux droits interconnectés capables à conduire un fluide.

7. Panneau de façade solaire selon la revendication 6, caractérisé en ce qu'il comporte une plaque extérieure transparente (108) au dessus de la surface de capteur solaire et des dispositifs de ventilation vers (150, 151, 152, 153) l'atmosphère de l'espace entre la plaque extérieure et la surface de capteur.

8. Panneau de façade solaire selon la revendication 7, caractérisé en ce que la plaque extérieure transparente (108) consiste d'un matériau transparent en superficie dont la surface extérieure est formé par un nombre de creux uniformes, dont chaque creux décrit un triangle équilatéral, où les triangles sont arrangés de façon que chaque coté de chaque triangle est partagé avec un triangle d'à coté et en ce que les creux définissent approximativement les cotés d'une pyramide inverse à base triangulaire équilatérale, des arrêtes égales et la longueur d'un coté de base égal au produit $2\sqrt{6}$ multiplié avec la profondeur de la pyramide.

9. Panneau de façade solaire selon les revendications 3, 4 ou 5, caractérisé en ce que les vannes de réglage (66, 68, 74, 76) se trouvent pres du haut et pres du bas de chaque panneau d'isolation (28, 30) afin de contrôler le flux de fluides dans les circuits collecteur et émetteur.

10. Panneau de façade solaire selon les revendications 1, 3 ou 6, caractérisé en ce qu'il comporte des dispositifs de conduits (102) couplés au circuit de fluide émetteur qui s'étendent à un point en dehors du panneau.

## Patentansprüche

1. Sonnenfassadenelement mit inwendiger Wärmespeicher- Vorrichtung beinhaltend einen zweiten Teil (36) eines geschlossenen Kollektorflüssigkeits- Kreislaufes (14), einen ersten Teil (42) eines geschlossenen Verbraucherflüssigkeits- Kreislaufes (18), einen Wärmeaustauscher, der den zweiten Teil vom ersten Teil trennt und ein Speichervolumen (16), wobei die genannten ersten und zweiten Teile, der Wärmeaustauscher und das Speichervolumen zwischen einem Paar von Isolationsschichten (28, 30) angeordnet sind, und wobei der erste Teil (34) des Kollektorflüssigkeits- Kreislaufes und der zweite Teil (44) des Verbraucherflüssigkeits- Kreislaufes ausserhalb der Isolationsschichten angeordnet sind, während der erste Teil des Kollektorflüssigkeits- Kreislaufes sich in wärmeaustauschender Verbindung mit einem Sonnenstrahlenkollektor befindet, und dadurch gekennzeichnet, dass die Wärmeaustausch- Vorrichtung aus einem Wandelement (32) besteht, dessen äussere Fläche sich in wärmeaustauschender Verbindung mit der Kollektorflüssigkeit im zweiten Teil und dessen innere Fläche sich in Wärmeaustauschender Verbindung mit der Verbraucherflüssigkeit im ersten Teil befindet, und das Speichervolumen vom Wandelement (32) getrennt und davon entfernt ist, der Sonnenstrahlenkollektor aus einer Wandfläche besteht, eine raumseitige Heizwand sich in wärmeaustauschender Verbindung mit dem zweiten Teil des Verbraucherflüssigkeits- Kreislaufes befindet, und wobei die Kollektor- und Verbraucherkreislauf- Wände je aus wärmeleitendem Plattenmaterial bestehen.

2. Sonnenfassadenelement nach Anspruch 1, dadurch gekennzeichnet, dass das Speichervolumen aus einem Flüssigkeitskreislauf (16) besteht um eine Speicherflüssigkeit (17) in einem geschlossenen Kreislauf vom zweiten Teil (36) des Kollektorflüssigkeits- Kreilaufes (14), worin eine wärmeaustauschende Verbindung mit der Kollektorflüssigkeit (15) stattfindet, zum ersten Teil (42) des Verbraucherflüssigkeits- Kreislaufes (18), worin eine wärmeaustauschende Verbindung mit der Verbraucherflüssigkeit (19) stattfindet, zu führen.

3. Sonnenfassadenelement nach Anspruch 2, dadurch gekennzeichnet, dass es Regelventile (66, 68, 74, 76), umfasst, welche den Flüssigkeitsfluss zwischen den ersten Teilen (34, 42) und den zweiten Teilen (36, 44) der beiden Kollektor- und Verbraucherkreisläufe (14, 18) kontrollieren.

4. Sonnenfassadenelement nach Anspruch 3, dadurch gekennzeichnet, dass die Speicherflüssigkeit (17) im Speicherkreislauf (16) von der Kollektorflüssigkeit (15) im zweiten Teil des Kollektorkreislaufes und von der Verbraucherflüssigkeit (19) im ersten Teil des Verbraucherkreislaufes (18) mittels Wändes (20, 21, 22, 23) aus wärmeleitendem Plattenmaterial getrennt sind.

5. Sonnenfassadenelement nach Anspruch 4, dadurch gekennzeichnet, dass die Wände (20, 21, 22, 23) aus wärmeleitendem Plattenmaterial im zweiten Teil (36) des Kollektorkreislaufes (14) und im ersten Teil (42) des Verbraucherkreislaufes (18) mittels Oeffnungen (62, 64) durchbrochen sind, welche ermöglichen, dass die Kollektorflüssigkeit im zweiten Teil des Kollektorkreislaufes und dass die Verbraucherflüssigkeit im ersten Teil des Verbraucherkreislaufes je unter sich auf der gemein- samen Seite des Wärmeaustausch- Wand- elementes (32) miteinander kommunizieren können.

6. Sonnenfassadenelement nach Anspruch 1, dadurch gekennzeichnet, dass das wärmeleitende Plattenmaterial eine Aussenseite mit einer Anzahl gleichförmiger Vertiefungen aufweist, wobei jede Vertiefung von einem gleichseitigen Dreieck beschrieben wird und die Dreiecke so aneinander gereiht sind, das jede Seite eines jeden Dreiecks mit einer Seite eines anliegenden Dreiecks identisch ist, und die Vertiefungen die Gestalt einer umgekehrten Pyramide beschreiben, welche eine Basisfläche aus einem gleichseitigen Dreieck und gleichseitige Kanten aufweist, und wobei die Seitenlänge einer Basiskante gleich dem Produkt aus $2\sqrt{6}$ mal die Pyramidentiefe betragen; und wobei die Rückseite des wärmeleitenden Plattenmaterials eine Reihe von geradlinigen, unterein- ander verbundenen, flüssigkeitsführenden Kanä- len bildet.

7. Sonnenfassadenelement nach Anspruch 6, dadurch gekennzeichnet, dass über der Kollektoroberfläche (24) eine lichtdurchlässige Platte (108) angeordnet ist, und der Raum zwischen Platte und Kollektoroberfläche mittels Ventilen (150, 151, 152, 153) an die Atmosphäre entlüftet werden kann.

8. Sonnenfassadenelement nach Anspruch 7, dadurch gekennzeichnet, dass die lichtdurchlässige Platte aus Plattenmaterial besteht, dessen Aussenseite eine Anzahl gleichförmiger Vertiefungen aufweist, wobei jede Vertiefung von einem gleichseitigen Dreieck beschrieben wird und die Dreiecke so aneinander gereiht sind, dass jede Seite eines jeden Dreiecks mit einer Seite eines anliegenden Dreiecks identisch ist, und die Vertiefungen die Gestalt einer umgekehrten Pyramide beschreiben, welche eine Basisfläche aus einem gleichseitigen Dreieck und gleichseitige Kanten aufweist, und wobei die Seitenlänge einer Basiskante gleich dem Produkt aus $2\sqrt{6}$ mal die Pyramidentiefe betragen.

9. Sonnenfassadenelement nach Ansprüchen 3, 4 oder 5, dadurch gekennzeichnet, dass die Regelventile (66, 68, 74, 76) entlang den Oberkanten und Unterkanten der Isolationsschichten (28, 30) angeordnet sind um die Strömung der Kollektor- und Verbraucherkreisläufe zu regeln.

10. Sonnenfassadenelement nach Ansprüchen 1, 3 oder 6, dadurch gekennzeichnet, dass Zufluss- und Abflussrohre (102) dem Verbraucherkreislauf (18) angeschlossen sind, welche das Fassadenelement mit einem entfernten Ort verbinden.

**0 028 587**

*Fig.2.*

2

_Fig.3._

_Fig.4._